# EUROPÄISCHE PATENTSCHRIFT

(11) **EP 0 896 653 B1**
(45) Veröffentlichungstag und Bekanntmachung des Hinweises auf die Patenterteilung: **17.11.1999**
(21) Anmeldenummer: 97918143.5
(22) Anmeldetag: 17.04.1997
(51) Int. Cl.: F16H 57/04

(54) **GETRIEBESCHMIERUNG**
GEAR BOX LUBRICATION
LUBRIFICATION D'UNE BOITE DE VITESSES

(30) Priorität: 22.04.1996 DE 19615929
(43) Veröffentlichungstag der Anmeldung: 17.02.1999
(73) Patentinhaber: ZF FRIEDRICHSHAFEN Aktiengesellschaft, 88038 Friedrichshafen (DE)
(72) Erfinder: BIEBER, Gerold, D-88085 Langenargen (DE)
(86) Internationale Anmeldenummer: EP9701928
(87) Internationale Veröffentlichungsnummer: WO9740298

(56) Entgegenhaltungen:
- DE-A- 4 007 008
- DE-A- 4 342 233
- DE-B- 2 526 139
- JP-B- 5 101 808
- JP-B- 5 302 221

## Beschreibung

Die Erfindung betrifft ein Fahrzeugwechselgetriebe mit einer Vorrichtung zur Förderung von Schmiermittel für das Getriebe nach dem Oberbegriff von Anspruch 1, wie es aus der DE-A-4 342 233 bekannt ist.

Fahrzeuggetriebe, angeordnet im Antriebsstrang zwischen einem Antriebsmotor und den anzutreibenden Fahrzeugrädern, weisen zu ihrer Schmierung ein Schmiermittelsystem auf, das auf verschiedene Arten Schmiermittel an die Stellen im Getriebe fördert, die eine gesicherte Schmiermittelversorgung erfordern. Zu den zu schmierenden Stellen gehören insbesondere Zahnräder und Lager von Wellen, Achsen und Zahnrädern. Als Schmiermittel kommt heute vorzugsweise Getriebeöl unterschiedlicher Herstellung und Zusammensetzung zum Einsatz. Andere, insbesondere synthetische Schmiermittel könnten aber ebenfalls anwendbar sein.

Bekannt sind dem Fachmann heute prinzipiell zwei Arten von Getriebeschmierungen.

Bei der Tauchschmierung planschen die Zahnräder im Schmiermittel und verteilen das Schmiermittel beim Weiterdrehen auf die Zahnräder und Lager. Das Schmiermittel lagert sich beim Durchdrehen der Zahnräder durch das Schmiermittel kurzzeitig zwischen den Zähnen an und wird beim Weiterdrehen, insbesondere auch unter Fliehkrafteinwirkung, wieder abgegeben. Sie wird vorzugsweise bei kleineren Getrieben mit bis zu sechs Gängen und mit Motordrehmomenten bis 1 000 Nm sowie in Verteilergetrieben verwendet. Die Art der Schmierung bietet den Vorteil eines einfachen Aufbaus, zumal meist nur Fangbleche und Abschirmungen im Getriebe anzuordnen sind.

Bei der Pumpenschmierung verteilt eine von der Antriebswelle angetriebene Verdrängerpumpe über ein Leitungsund Kanalnetz das Schmiermittel auf die Zahnräder und Lager. Es gibt Varianten, bei denen ein Teil der Zahnräder im Schmiermittelvolumen eintauchen oder aber alle Räder außerhalb des Schmiermittels liegen (Trockensumpfschmierung).

Zur Schmierung ist nur wenig Schmiermittel notwendig. Die Schmierung muß aber an allen kritischen Stellen und unter allen Bedingungen funktionieren, da es sonst zu Blokkaden und Totalschäden von Bauteilen im Getriebe kommen kann.
Das Schmiermittel hat noch die wesentliche zusätzliche Funktion, entstehende Wärme von Zahnrädern oder Synchronisierungen abzuführen und zu verteilen.

Es bleiben bei beiden Schmierungen noch Probleme, die zu lösen sind.

Tauchschmierungen und vor allem motordrehzahlabhängige Pumpenschmierungen verhalten sich konträr zu den Erfordernissen der Getriebe im Hinblick auf Schmierung und Kühlung.
- Bei tiefen Temperaturen und somit hochviskosem Schmiermittel müssen Zahnräder und Lager nur vom Schmiermittel benetzt sein. Eine Kühlung ist unnötig oder schadet. Die Durchtriebsverluste erreichen ein Maximum und erschweren das Synchronisieren.
- Bei hohen Temperaturen und hohen Drehzahlen ist das Schmiermittel wohl dünnflüssig und alle Zahnräder und Lager werden durch die große Menge an verwirbeltem Schmiermittel oder von der Pumpe gefördertem Schmiermittel mehr als ausreichend geschmiert und die Zahnräder gekühlt, aber es wird unnötig viel Energie verbraucht, die dazu beiträgt, daß die Getriebetemperatur zusätzlich steigt.
- Für Getriebe, die in ihrem Einsatz keine zulässige Beharrungstemperatur erreichen, ist es üblich, Kühlsets einzusetzen. Vor allem bei geräuschgekapselten Getrieben ist diese Vorgehensweise üblich. Hierbei wird Schmiermittel mittels motordrehzahlabhängiger Pumpen über einen separaten Luft/SchmiermittelWärmetauscher gekühlt. Diese Pumpen sind aufwendig und laufen unabhängig ihrer Erfordernis mit und verbrauchen Energie.

Aufgabe der Erfindung ist es, die bekannte Anordnung weiter auszugestalten.

Die Aufgabe wird gelöst durch eine Schmiermittelförderung mit den Merkmalen des Anspruchs 1. Ausgestaltungen sind Gegenstand von Unteransprüchen.

Eine von einem Elektromotor angetriebene Kreiselpumpe läuft unabhängig von der Getriebeeingangsdrehzahl und fördert das Schmiermittel aus einem Vorratsbereich zu den zu schmierenden Stellen. Als Elektromotoren sind sowohl Gleichstrom- als auch Drehstrommotoren anwendbar.

Für die Getriebeschmierung und Kühlung ergibt sich ein sehr gut geeignetes Verhalten mit folgenden Vorteilen.

Bei tiefen Temperaturen und großer Schmiermittelviskosität fließt bei relativ kleiner Stromaufnahme des Elektromotors, bedingt durch die großen Durchflußwiderstände, sehr wenig oder kein Schmiermittel.
Bei hohen Temperaturen und kleiner Schmiermittelviskosität sinkt der Durchflußwiderstand und entsprechend steigt die geförderte Ölmenge, ohne daß wesentliche Wärme von der Schmiermittelpumpe selbst erzeugt wird. Dadurch wird die Wärmeabfuhr verbessert.

Da weder Zahnräder im Schmiermittel planschen noch Energie von der Antriebswelle benötigt wird, wird das Synchronisieren bei tiefen Temperaturen nicht erschwert.

Bei Benutzung eines Wärmetauschers zum Kühlen des Schmiermittels im Getriebes bringt die Kreiselpumpe eine sehr einfache und zuverlässige Lösung, da die Kreiselpumpe nur zwischen Schmiermittelablaß und Wärmetauscher eingefügt wird, um das gekühlte Schmiermittel in den Öleinlaß zurückzufördern.

Beim Ausfall des Verbrennungsmotors, beispielsweise im Falle eines Abschleppvorganges, bleibt die Schmierung des Getriebes erhalten.

Besonders vorteilhaft ist eine Kombination einer Hydraulikpumpe zur Druckerzeugung, beispielsweise eines separaten Hydraulikkreises, und einer Kreiselpumpe zur Förderung von Getriebeschmiermittel, die von einem gemeinsamen Elektromotor angetrieben wird. Diese Elemente könnten besonders vorteilhaft in einer Einschubeinheit zusammengefaßt werden, die für verschiedene Anwendungsfälle genutzt werden kann.

Die Erfindung wird anhand einer Abbildung näher beschrieben.

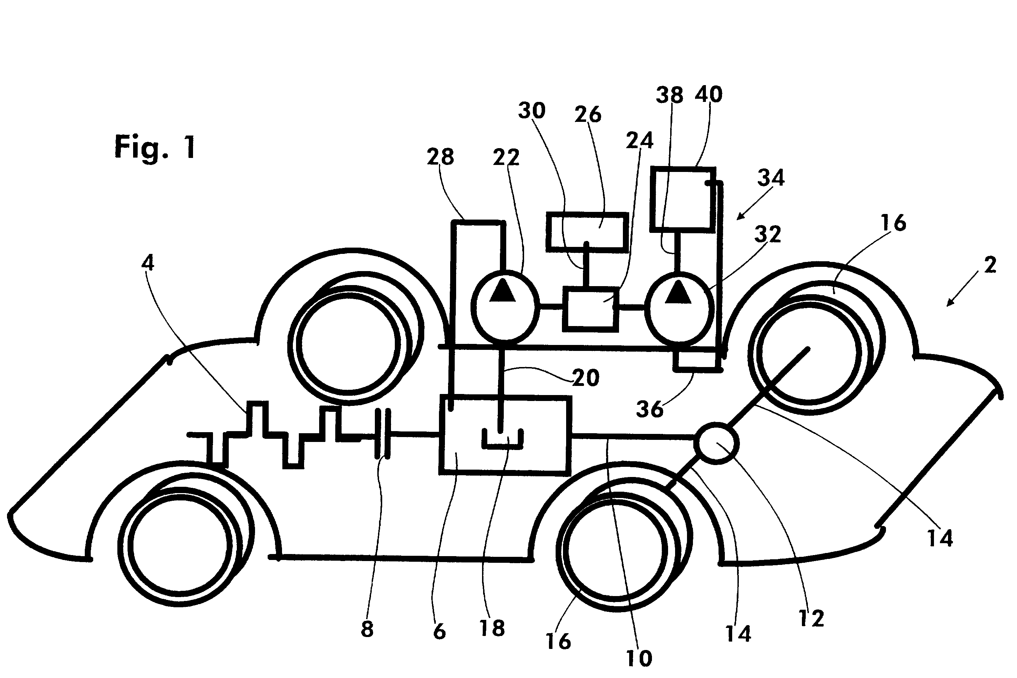

Die Fig. 1 zeigt eine schematische Darstellung der Erfindung

Die Fig. 1 zeigt eine schematische Darstellung eines Fahrzeugs 2 mit einem Antriebsaggregat 4, einem Getriebe 6 und einer zwischen Antriebsaggregat 4 und Getriebe 6 vorgesehenen Kupplung 8. Das Getriebe 6 ist über eine Abtriebswelle 10 mit einem Differential 12 verbunden, von dem aus je eine Halbwelle 14 zu den angetriebenen Rädern 16 führt. Im Getriebe 6 ist ein Ölvorrat 18 vorgesehen, der über eine Leitung 20 mit einer Pumpe 22 verbunden ist. Die Pumpe 22 wird von einem Elektromotor 24 angetrieben, der von einer Steuerung 26 gesteuert und mit Energie versorgt wird. Die Pumpe 22 führt Schmiermittel über eine Leitung 28 zu den zu schmierenden Bauteilen des Getriebes 6. Die Pumpe 22 und der Elektromotor 24 können auch innerhalb des Getriebes 6 angeordnet sein. Dann ist lediglich die Steuerleitung 30 nach Außerhalb geführt und mit der außenliegenden Steuerung 26 verbunden.

In einer Ausgestaltung kann auch die Steuerung 26 innerhalb des Getriebes 6 vorgesehen sein.

In der Fig. 1 ist auch eine andere vorteilhafte Ausgestaltung aufgezeigt, indem der Elektromotor 24 gleichzeitig mit der Pumpe 22 eine weitere Pumpe 32 als eine Hydraulikpumpe für einen Hydraulikkreis 34 antreibt, der hier mit zuführender 36 und abführender Leitung 38 und einem Verbraucher 40 schematisch gezeigt ist.

### Bezugszeichen

- 2: Fahrzeug
- 4: Antriebsaggregat
- 6: Getriebe
- 8: Kupplung
- 10: Abtriebswelle
- 12: Differential
- 14: Halbwelle
- 16: angetriebene Räder
- 18: Ölvorrat
- 20: Leitung
- 22: Pumpe
- 24: Elektromotor
- 26: Steuerung
- 28: Leitung
- 30: Steuerleitung
- 32: Hydraulikpumpe
- 34: Hydraulikkreis
- 36: zuführende Leitung
- 38: abführende Leitung
- 40: Verbraucher

## Patentansprüche

1. Fahrzeugwechselgetriebe (6) mit einer von einem Elektromotor (24) angetriebenen Pumpe (22) zur Förderung von Schmiermittel für das Getriebe (6), dadurch **gekennzeichnet**, daß die Pumpe (22) und der Elektromotor (24) innerhalb des Getriebes (6) angeordnet sind.

2. Fahrzeugwechselgetriebe (6) nach Anspruch 1, dadurch **gekennzeichnet,** daß der Elektromotor (24) gleichzeitig eine Hydraulikpumpe (32) eines Hydraulikkreises (34) antreibt.

3. Fahrzeugwechselgetriebe (6) nach Anspruch 2, dadurch **gekennzeichnet,** daß die Pumpe (22) zur Förderung des Schmiermittels, Elektromotor (24) und Hydraulikpumpe (32) in einer auswechselbaren Einschubeinheit vorgesehen sind.

4. Fahrzeugwechselgetriebe (6) nach einem der Ansprüche 1 bis 3, dadurch **gekennzeichnet,** daß eine Steuerung (26) für den Elektromotor (24) innerhalb des Getriebes (6) angeordnet ist.

## Claims

1. Vehicle speed-change gearbox (6) having a pump (22) driven by an electric motor (24) for delivering lubricant for the gearbox (6), characterized in that the pump (22) and the electric motor (24) are disposed inside the gearbox (6).

2. Vehicle speed-change gearbox (6) according to claim 1, characterized in that the electric motor (24) simultaneously drives a hydraulic pump (32) of a hydraulic circuit (34).

3. Vehicle speed-change gearbox (6) according to claim 2, characterized in that the pump (22) for delivering the lubricant, the electric motor (24) and the hydraulic pump (32) are provided in an exchangeable withdrawable unit.

4. Vehicle speed-change gearbox (6) according to one of claims 1 to 3, characterized in that a controller (26) for the electric motor (24) is disposed inside the gearbox (6).

## Revendications

1. Boîte de vitesses de véhicule (6) comportant une pompe (22) entraînée par un moteur électrique (24) pour le refoulement de lubrifiant pour la boîte de vitesses (6), **caractérisée en ce que** la pompe (22) et le moteur électrique (24) sont disposés à l'intérieur de la boîte de vitesses (6).

2. Boîte de vitesses de véhicule (6) selon la revendication 1, **caractérisée en ce que** le moteur électrique (24) entraîne en même temps une pompe hydraulique (32) d'un circuit hydraulique (34).

3. Boîte de vitesses de véhicule (6) selon la revendication 2, **caractérisée en ce que** la pompe (22) pour le refoulement du lubrifiant, le moteur électrique (24) et la pompe hydraulique (32) sont prévus dans une unité remplaçable à insérer.

4. Boîte de vitesses de véhicule (6) selon l'une des revendications 1 à 3, **caractérisée en ce qu'**une commande (26) pour le moteur électrique (24) est disposée à l'intérieur de la boîte à vitesses (6).
